Europäisches Patentamt

(19) European Patent Office

Office européen des brevets

(11) Publication number: **0 461 824 A2**

# (12) EUROPEAN PATENT APPLICATION

(21) Application number: **91305180.1**

(22) Date of filing: **10.06.91**

(51) Int. Cl.⁵: **G06F 1/16**

(30) Priority: **14.06.90 US 537655**

(43) Date of publication of application:
**18.12.91 Bulletin 91/51**

(84) Designated Contracting States:
**DE FR GB IT**

(71) Applicant: **International Business Machines
Corporation
Old Orchard Road
Armonk, N.Y. 10504 (US)**

(72) Inventor: **Howell, Steven Ernest
861 Edgewood Drive
Lexington, Kentucky 40515 (US)**
Inventor: **Trumbo, Brian Alan
1076 S.W. 27th Avenue
Boynton Beach, Florida 33426 (US)**

(74) Representative: **Killgren, Neil Arthur
IBM United Kingdom Limited Intellectual
Property Department Hursley Park
Winchester Hampshire SO21 2JN (GB)**

(54) **Method for assembly of an electrochemical storage device.**

(57) This disclosure relates to a computer apparatus and method for assembly of a direct access storage device with such a computer and describes a direct attachment of an electromechanical storage device to the bus structure provided by a planar board or motherboard of a personal computer system. An electromechanical direct access storage device such as a magnetic or optical disk drive has a circuit board mounted therewith which provides a first connector capable of mating with a second connector mounted on the planar board. A chassis and mounting arrangement are provided by which an open bay in which the storage device is to be mounted is accessible from the front of the personal computer, and the device is guided into a position for mating engagement of the connectors while the circuit and planar boards are parallel.

EP 0 461 824 A2

FIG. 4

This invention relates to a computer apparatus and a method for assembly thereof. More particularly, a direct attachment is described of an electromechanical storage device such as hard disk drive to the bus structure provided by a planar board or motherboard of a personal computer system.

Personal computer systems in general and IBM personal computers in particular have attained widespread use for providing computer power to many segments of today's modern society. Personal computer systems can usually be defined as a desk top, floor standing, or portable microcomputer that consists of a system unit having a single system processor and associated volatile and non-volatile memory, a display monitor, a keyboard, one or more electromechanical direct access storage devices (DASD), and an optional printer. One of the distinguishing characteristics of these systems is the use of a motherboard or system planar board to electrically connect these components. These systems are designed primarily to give independent computing power to a single user and are inexpensively priced for purchase by individuals or small businesses. Examples of such personal computer systems are IBM's PERSONAL, COMPUTER AT and IBM's PERSONAL SYSTEM/2 Models 25, 30, 50, 60, 70 and 80 ("IBM PERSONAL COMPUTER AT" and "PERSONAL SYSTEM/2" are trademarks of International Business Machines Corporation).

Prior to the present invention, the conventional practice in providing for data transfer between components of the personal computer located on the planar board (which receive digital data as input from various elements of the system and deliver such data as output to various elements of the system) and an electromechanical direct access storage device has been to interpose a controller card, controller circuitry or the like between the bus or buses provided on the planar board and the storage device or DASD. Typically, data is communicated through electrical connections established by flexible conductors or cables extending between the controller and the storage device.-

While such connections between the planar board and DASD have functioned successfully and have become an industry standard, it is recognized that there are problems associated with those connections. Some of those problems relate to the attention to detail necessary during initial assembly or subsequent reassembly of the computer system. The necessity of giving such attention increases the cost of manufacture and the possibility of error in assembly. Further, the cabling required increases the number of components to be stocked, the space required in the assembly, and the possibilities for emitting electromagnetic interference.

It is known to provide a personal computer with "expansion slots" including electrical connectors and associated mechanical supports for receiving optional accessory cards or adapter boards, and it has been conventional to provide certain functions (such as data communication modems, video display and disk drive controllers, etc.) on the accessory cards which mount in the expansion slots. Recently, it has been proposed to provide DASD devices combined with appropriate controllers on an accessory card or board, as shown for example in Harrison United States Patent 4,639,863. While such arrangements avoid certain potential difficulties with cabling, other problems are raised relating to power requirements, electromagnetic emissions, and operating life of the electromechanical devices with disks rotating about horizontally disposed axes.

According to a first aspect of the invention there is provided a personal computer apparatus comprising: at least one electromechanical direct access storage device for storing and delivering digital data and having a circuit board and first connector means mounted on said circuit board for establishing operative connections for the transfer of data to and from the storage device, a plana board for mounting circuit components for processing digital data and having second connector means mounted on said planar board for establishing direct operative connection between said planar board and said storage device, and means for positioning said storage device and said planar board one relative to the other for mating of said first and second connector means and with said circuit board parallel to said planar board.

Direct connection of an electromechanical direct access storage device to the bus structure is provided via a planar board in a personal computer. The necessity of providing a cable or other flexible electrical conductor is obviated and the problems mentioned above are avoided.

Viewed from another aspect there is provided a method of assembling a computer apparatus which has (1) at least one electromechanical direct access storage device for receiving, storing and delivering digital data and having a circuit board and (2) a planar board for mounting circuit components for processing digital data, a mating pair of connectors, one mounted on said storage device circuit board and one mounted directly on said planar board, for establishing operative connections for transmittal of digital data between the storage device and circuit components mounted on the planar board, the method comprising the steps of moving the storage device relative to the planar board for aligning the connectors and positioning the circuit board parallel to the planar board, and moving the storage device relative to the planar board for coupling the connectors.

A method of assembling a personal computer is provided which facilitates both initial assembly and subsequent servicing. Assembly or reassembly of a personal computer is accomplished following steps which include moving an electromechanical direct access storage device into position to mate, and mating connectors provided on the device with connectors mounted directly on the planar board of a personal computer. In accordance with this invention, the electromechanical direct access storage device is accessible for such assembly or reassembly from the front panel of the personal computer.

An embodiment of the invention will now be described, by way of example, with reference to the accompanying drawings wherein:

Figure 1 is a perspective view of a personal computer embodying this invention;

Figure 2 is an exploded perspective view of certain elements of the personal computer of Figure 1 including a chassis, a cover, an electromechanical direct access storage device and a planar board, and illustrating certain relationships among those elements;

Figure 3 is a schematic view of certain components of the personal computer of Figures 1 and 2;

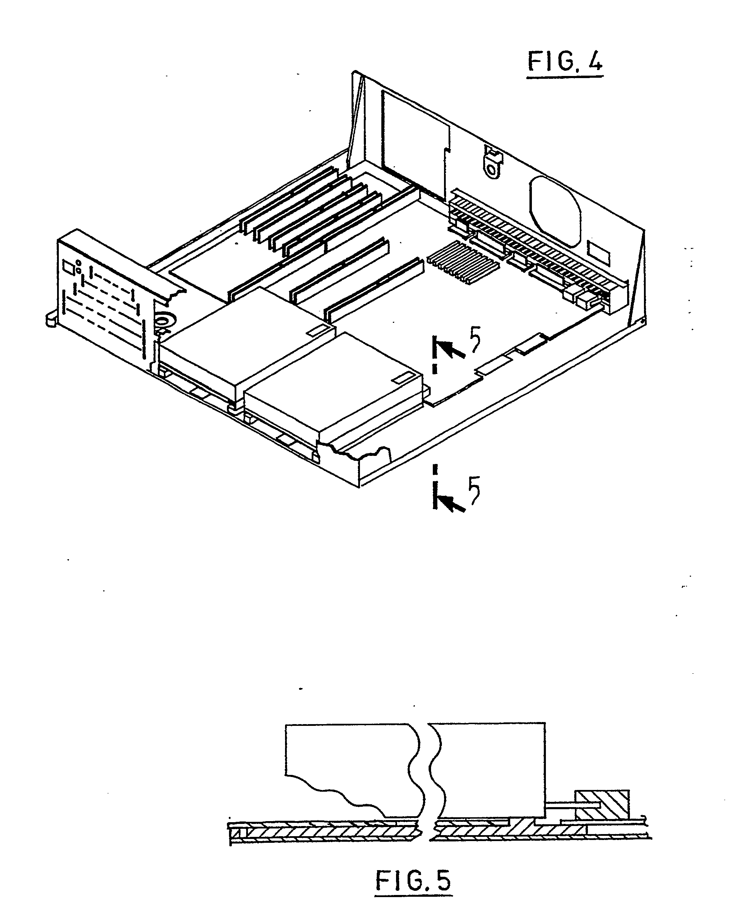

Figure 4 is a view similar to Figure 2 showing certain elements of Figure 2 as assembled; and

Figure 5 is a partial elevation view, in section, taken along the line 5 - 5 in Figure 4.

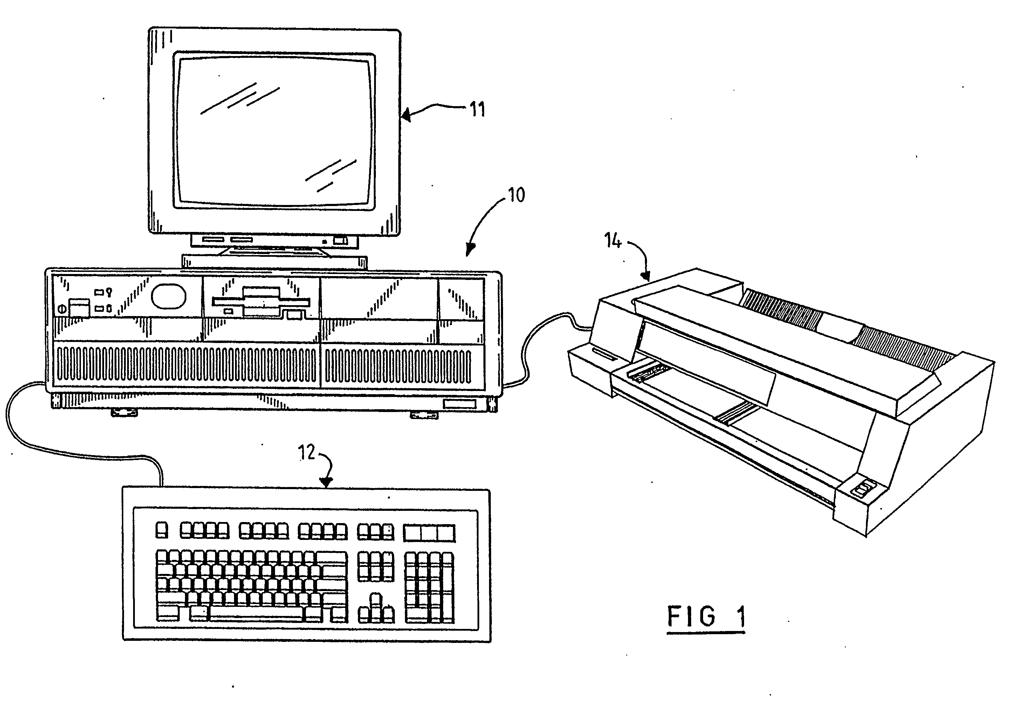

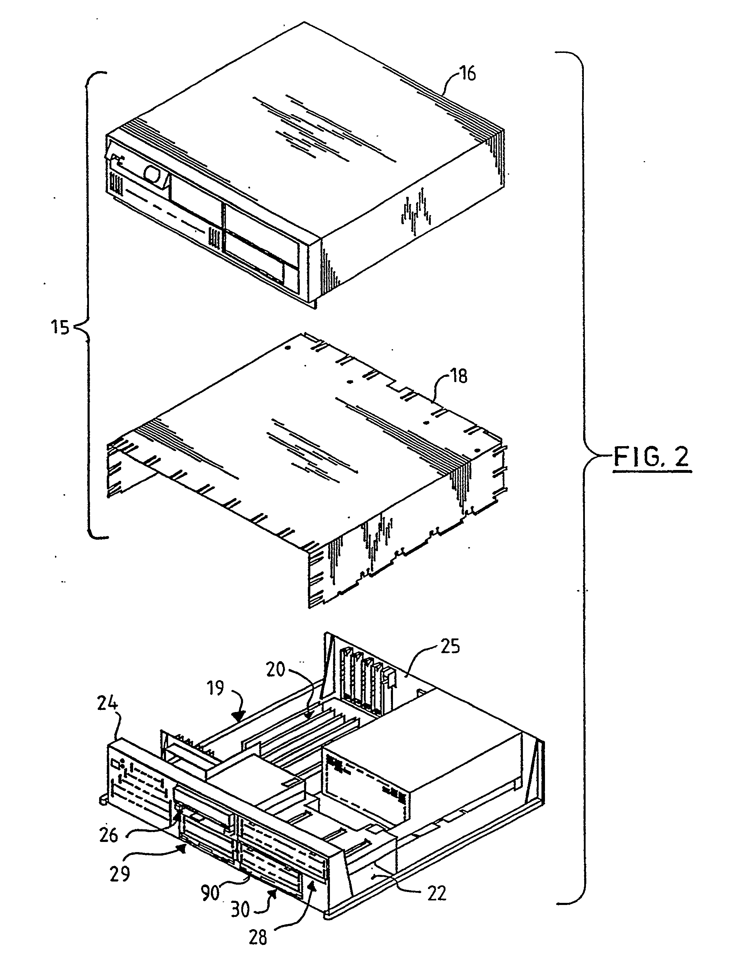

Referring now more particularly to the accompanying drawings, a microcomputer embodying the present invention is there shown and generally indicated at 10 (Figure 1). As mentioned hereinabove, the computer 10 may have an associated monitor 11, keyboard 12 and printer or plotter 14. The computer 10 has a cover 15 formed by a decorative outer member 16 (Figure 2) and an inner shield member 18 which cooperate with a chassis 19 in defining an enclosed, shielded volume for receiving electrically powered data processing and storage components for processing and storing digital data. At least certain of these components are mounted on a planar 20 which is mounted on the chassis 19 and provides a means for electrically interconnecting the components of the computer 10 including those identified above and such other associated elements as floppy disk drives, various forms of direct access storage devices, accessory cards or boards, and the like.

The chassis 19 has a base indicated at 22, a front panel indicated at 24, and a rear panel indicated at 25 (Figure 2). The front panel 24 defines at least one open bay (and in the form illustrated, four bays) for receiving a data storage device such as a disk drive for magnetic or optical disks, a tape backup drive, or the like. In the illustrated form, a pair of upper bays 26, 28 and a pair of lower bays 29, 30 are provided. One of the upper bays 26 is adapted to receive peripheral drives of a first size (such as those known as 3.5 inch drives) while the other 28 is adapted to receive drives of a slected one of two sizes (such as 3.5 and 5.25 inch) and the lower bays are adapted to receive devices of only one size (3.5 inch).

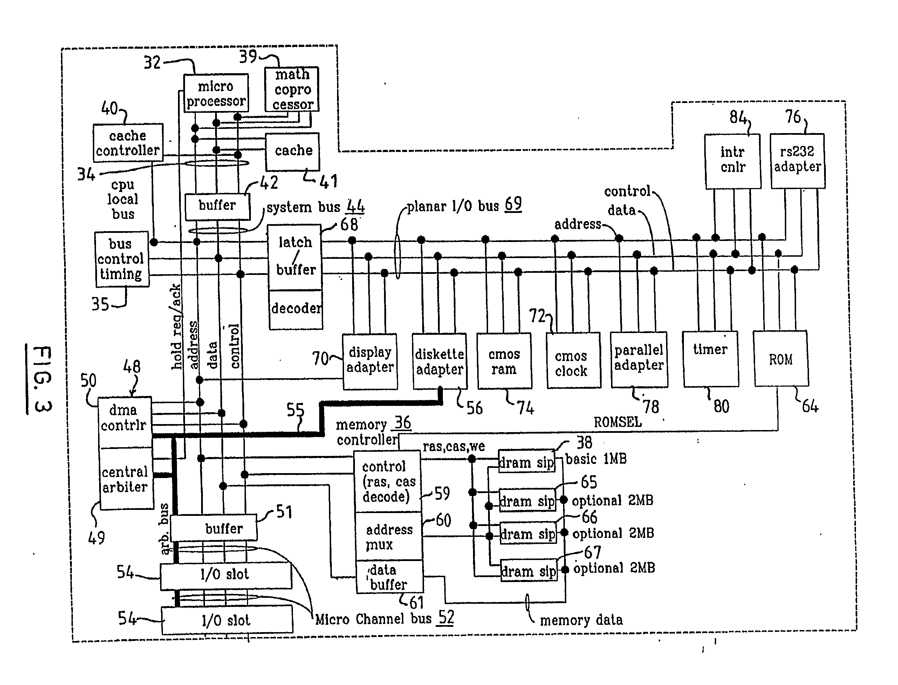

Prior to relating the above structure to the present invention, a summary of the operation in general of the personal computer system 10 may merit review. Referring to Figure 3, there is shown a block diagram of a personal computer system illustrating the various components of the computer system such as the system 10 in accordance with the present invention, including components mounted on the planar 20 and the connection of the planar to the I/O slots and other hardware of the personal computer system. Connected to the planar is the system processor 32 comprised of a microprocessor which is connected by a high speed CPU local bus 34 through a bus control timing unit 35 to a memory control unit 36 which is further connected to a volatile random access memory (RAM) 38. While any appropriate microprocessor can be used, one suitable microprocessor is the 80386 which is sold by INTEL.

While the present invention is described hereinafter with particular reference to the system block diagram of Figure 3, it is to be understood at the outset of the description which follows that it is contemplated that the apparatus and method in accordance with the present invention may be used with other hardware configurations of the planar board. For example, the system processor could be an Intel 80286 or 80486 microprocessor.

Returning now to Figure 3, the CPU local bus 34 (comprising data, address and control components) provides for the connection of the microprocessor 32, a math coprocessor 39, a cache controller 40, and a cache memory 41. Also coupled on the CPU local bus 24 is a buffer 42. The buffer 42 is itself connected to a slower speed (compared to the CPU local bus) system bus 44, also comprising address, data and control components. The system bus 44 extends between the buffer 42 and a further buffer 51. The system bus 44 is further connected to a bus control and timing unit 35 and a DMA unit 48. The DMA unit 48 is comprised of a central arbitration unit 49 and DMA controller 50. The buffer 51 provides an interface between the system bus 44 and an optional feature bus such as the MICRO CHANNEL bus 52. Connected to the bus 52 are a plurality of I/O slots 54 for receiving MICRO CHANNEL adapter cards which may be further connected to an I/O device or memory.

An arbitration control bus 55 couples the DMA controller 50 and central arbitration unit 49 to the I/O slots 54 and a diskette adapter 56. Also connected to the system bus 44 is a memory control unit 36 which is comprised of a memory controller 59, an address multiplexor 60, and a data buffer 61. The memory control unit 36 is further connected to a random access memory as represented by the RAM module 38. The memory controller 36 includes the logic for mapping addresses to and from the microprocessor 32 to particular areas of RAM 38. This logic is used to reclaim RAM previously occupied by BIOS. Further generated by memory controller 36 is a ROM select signal (ROMSEL), that is used to enable or disable ROM 64.

While the microcomputer system 10 is shown with a basic 1 megabyte RAM module, it is understood that additional memory can be interconnected as represented in Figure 3 by the optional memory modules 65 through 67. For purposes of illustration only, the present invention is described with reference to the basic one megabyte memory module 38.

A further buffer 68 is coupled between the system bus 44 and a planar I/O bus 69. The planar I/O bus 69 includes address, data, and control components respectively. Coupled along the planar bus 69 are a variety of I/O adapters and other components such as the display adapter 70 (which is used to drive the monitor 11), a clock 72, nonvolatile RAM 74 herein after referred to as NVRAM, a RS232 adapter 76, a parallel adapter 78, a plurality of timers 80, a diskette adapter 56, an interrupt controller 84, and a read only memory 64. The read only memory 64 includes the BIOS that is used to interface between the I/O devices and the operating system of the microprocessor 32. BIOS stored in ROM 64 can be copied into RAM 38 to decrease the execution time of BIOS. ROM 64 is further responsive (via ROMSEL signal) to memory controller 36. If ROM 64 is enabled by memory controller 36, BIOS is executed out of ROM. If ROM 64 is disabled by memory controller 36, ROM is not responsive to address enquiries from the microprocessor 32 (i.e. BIOS is executed out of RAM).

The clock 72 is used for time of day calculations and the NVRAM is used to store system configuration data. That is, the NVRAM will contain values which describe the present configuration of the system. For example, NVRAM contains information describing the capacity of a fixed disk or diskette, the type of display, the amount of memory, time, date, etc. Of particular importance NVRAM will contain data (can be one bit) which is used by memory controller 36 to determine whether BIOS is run out of ROM or RAM and whether to reclaim RAM intended to be used by BIOS RAM. Furthermore, these data are stored in NVRAM whenever a special configuration program, such as SET Configuration, is executed. The purpose of the SET Configuration program is to store values characterizing the configuration of the system to NVRAM. The personal computer apparatus 10 shown in the drawings has a pair of electromechanical direct access storage devices 90, 91 each for storing and delivering digital data. The devices 90, 91 may be devices which use magnetic media such as fixed or hard disk drives or devices which use optical media such as the drives known as compact disc drives. The computer may be provided with only a single drive, although two have been here shown. Each of the drives has a corresponding first connector means for establishing operative connections for the transfer of data to and from the corresponding storage device. In the accompanying drawings, only the connectors associated with one device 91 are visible and thus identified with reference characters. Preferably, and as illustrated, each connector (94 for device 91) is a card edge connector defined by a plurality of strips of conductive material extending parallel one to another and spaced apart along, and perpendicular to, an edge of a circuit card. The circuit card (not visible in its entirety in the drawings) underlies the corresponding drive device, is mounted to the drive device, and defines a plane.

As described hereinabove, the personal computer also comprises a planar board for mounting circuit components for processing digital data. The planar board has second connector means mounted directly on the planar board for establishing direct operative connection between the bus or buses provided on the planar board and at least one of the storage devices 90, 91. As with the connectors associated with the devices, only the connector 98 associated with the device 91 is visible in the drawings. The bus or buses are typically provided by conductive pathways formed on or in the planar board as is well known. Each of the second connectors preferably is a socket for receiving a corresponding one of the first connectors. Thus the first and second connectors are a mating pair of male and female connectors. The planar board, as indicated by its name and is well known, is a circuit board which defines a plane similarly to the circuit boards which underlie the drive devices to be mounted.

The personal computer is provided with means for positioning the storage devices 90, 91 relative to the planar board 20 one relative to the other so that the first connector 94 and the second connector 98 mate. When the connectors are mated, the planar board and the circuit boards underlying the drive devices are parallel and, in the embodiment shown, slightly vertically spaced one from another. In the form illustrated, and as preferred for this invention, such positioning means takes the form of a guide tray or support 99 and a co-operating slide 100. As described more fully hereinafter, the support 99 is secured adjacent the planar board during assembly of the personal computer, while the slide 100 is secured to the storage device 90, 91. When the storage device is moved toward the planar board during assembly, the slide 100 and support 99 cooperate to guide the storage device into position and latch it in place.

In a personal computer which embodies this invention, the planar board 20 is secured in the chassis 19 having a front frame member 24 with the second connectors 98 directed toward openings provided in the front frame (and known as "bays") for storage devices. The support is similarly secured in the chassis 19, and the slide 100 to a storage device. Thereafter, a storage device such as the device 91 may be inserted into a bay from the front of the chassis, moved into position to align the corresponding first and second connectors 94, 98, and then pushed into the latched position as the connectors are coupled.

As will be understood, such coupling provides a direct connection between the storage device and the bus supplied by the planar board, absent any interposed accessory card, cable or the like. Further, the coupling is accomplished with front access, thereby simplifying the installation and removal of a storage device, and with the boards associated with the devices positioned parallel to the planar board. In the drawings and specifications there has been set forth a preferred embodiment of the invention and, although specific terms are used, the description thus given uses terminology in a generic and descriptive sense only and not for purposes of limitation.

## Claims

1. A computer apparatus comprising:

   at least one electromechanical direct access storage device for storing and delivering digital data and having a circuit board and first connector means mounted on said circuit board for establishing operative connections for the transfer of data to and from the storage device,

   a planar board for mounting circuit components for processing digital data and having second connector means mounted on said planar board for establishing direct operative connection between said planar board and said storage device, and

   means for positioning said storage device and said planar board one relative to the other for mating of said first and second connector means and with said circuit board parallel to said planar board.

2. Apparatus as claimed in claim 1 wherein said first connector means comprises a card edge connector defined by a plurality of strips of conductive material extending parallel one to another and spaced apart along, and perpendicular to, an edge of said circuit card.

3. Apparatus as claimed in claim 1 or claim 2 wherein said second connector means comprises a socket for receiving said first connector means.

4. Apparatus as claimed in any preceding claim wherein said first connector means is a male connector and said second connector means is a female connector.

5. Apparatus as claimed in any preceding claim wherein said storage device comprises magnetic media for receiving and storing digital data.

6. Apparatus as claimed in any of claims 1 to 5 wherein said storage device comprises optical media for storing digital data.

7. A personal computer apparatus comprising:

   at least one electromechanical direct access storage device for receiving, storing and delivering digital data and having a circuit card and first connector means for establishing operative connections for the transfer of data to and from the storage device, said first connector means comprising a male card edge connector defined by a plurality of strips of conductive material extending parallel one to another and spaced apart along, and perpendicular to, an edge of said circuit card, a planar board for mounting circuit components for processing digital data and having second connector means mounted on said planar board for establishing direct operative connection between said planar board and said storage device, said second connector means comprising a female socket for receiving said first connector means, and means for positioning said storage device and said planar board one relative to the other for mating of said first and second connectors and with said circuit board parallel to said planar board.

8. A personal computer apparatus as claimed in to Claim 7 further comprising a chassis for mounting said planar board and having a frame portion defining at least one bay for receiving an electromechanical direct access storage device, and a cover for forming with said chassis a shielding enclosure for said storage device and planar board, and further wherein said positioning means is oriented relative to said chassis for permitting installation and removal of said storage device through said bay formed in said frame portion of said chassis.

9. A personal computer apparatus having a high speed system processor compatible with application programs and operating system software designed to execute on slower speed system processors, said personal computer apparatus comprising:

   a high speed microprocessor having a real and protected mode of operation coupled to a high speed data bus;

   non-volatile memory electrically coupled to a slower speed data bus;

a bus controller for providing communications between the high speed data bus and the slower speed data bus;

volatile memory electrically responsive to the high speed data bus;

a memory controller electrically coupled to said volatile memory and said non-volatile memory, said memory controller regulating communications between said volatile memory and said high speed microprocessor;

at least one electromechanical direct access storage device for storing and delivering digital data and having a circuit card and first connector means for establishing operative connections for the transfer of data to and from the storage device, said first connector means comprising a male card edge connector defined by a plurality of strips of conductive material extending parallel one to another and spaced apart along, and perpendicular to, an edge of said circuit card, a planar board for mounting circuit components for processing digital data and having second connector means mounted on said planar board for establishing direct operative connection between said planar board and said storage device, said second connector means comprising a female socket for receiving said first connector means, and means for positioning said storage device and said planar board one relative to the other for mating of said first and second connectors and with said circuit board parallel to said planar board.

10. A method of assembling a computer apparatus which has (1) at least one electromechanical direct access storage device for receiving, storing and delivering digital data and having a circuit board and (2) a planar board for mounting circuit components for processing digital data, (3) a mating pair of connectors, one mounted on said storage device circuit board and one mounted directly on said planar board, for establishing operative connections for transmittal of digital data between the storage device and circuit components mounted on the planar board, the method comprising the steps of

moving the storage device relative to the planar board for aligning the connectors and positioning the circuit board parallel to the planar board, and

moving the storage device relative to the planar board for coupling the connectors.

FIG 1

FIG. 2

FIG. 3

FIG. 4

FIG. 5